# EUROPÄISCHE PATENTSCHRIFT

(11) **EP 0 910 454 B1**
(45) Veröffentlichungstag und Bekanntmachung des Hinweises auf die Patenterteilung: **23.05.2001**
(21) Anmeldenummer: 97932799.6
(22) Anmeldetag: 10.07.1997
(51) Int. Cl.: B01D 39/08, B01D 39/16, B01D 46/52

(54) **PARTIKELFILTER IN FORM EINES PLISSIERTEN SCHICHTFÖRMIGEN VLIESMATERIALS**
PARTICLE FILTER IN THE FORM OF A PLEATED NONWOVEN LAYER
FILTRE ANTIPARTICULES SOUS LA FORME D'UNE COUCHE DE NON-TISSE PLISSE

(30) Priorität: 12.07.1996 DE 19628184
(43) Veröffentlichungstag der Anmeldung: 28.04.1999
(73) Patentinhaber: Irema-Filter GmbH, 92353 Postbauer-Pavelsbach (DE)
(72) Erfinder: JUNG, Reinhard, D-92353 Kemnath (DE)
(74) Vertreter: Schneck, Herbert, Dipl.-Phys., Dr.
(86) Internationale Anmeldenummer: EP9703657
(87) Internationale Veröffentlichungsnummer: WO9802228

(56) Entgegenhaltungen:
- EP-A- 0 375 234
- DE-A- 4 123 122
- DE-U- 9 209 362
- US-A- 3 802 429

## Beschreibung

Die Erfindung richtet sich auf einen Partikelfilter in Form eines plissierten schichtförmigen Vliesmaterials. Derartige Filter werden z. B. als Raumfilter, insbesondere aber auch als Filter für den Kraftfahrzeuginnenraum verwendet. Bei der Herstellung derartiger Filter wird ein schichtförmiges Material plissiert, das heißt in ziehharmonikaartige Falten gelegt, wobei diese Falten üblicherweise durch angeklebte Randstreifen oder durch Einklemmen in einen Rahmen in ihrem wechselseitigen Abstand fixiert werden. Ein so ausgebildeter Filter wird dann seinerseits wieder in einen Filterrahmen auswechselbar eingesetzt.

Für die Filterung der Innenraumluft von Kraftfahrzeugen gibt es herkömmlicherweise unterschiedliche Ausführungsformen:

Bekannt sind einerseits Stapelfaservliese, die durch ein flächiges Stützgitter, beispielsweise aus Polypropylen, plissierbar gemacht werden. Anderseits gibt es sogenannte Meltblowns, die auf Spinnvliesen oder Papierträgern abgelegt werden und mit diesen über Ultraschallpunkte oder Heißschmelzkleberpunkte verbunden werden.

Die einzige Filterart, die in diesem Bereich ohne eine stützende Lage auskommt, ist die sogenannte Grobstaubmatte, die allerdings flach und unplissiert bzw. unplissierbar in die Filteraufnahme eingelegt wird.

Allen Filtermaterialien, die plissiert werden müssen, ist gemeinsam, daß sie eine gewisse Eigensteifigkeit aufweisen müssen, um unter praktischem Einsatzbedingungen ihre Faltenform beizubehalten, weshalb herkömmlicherweise diese Vliese laminatartig mit Trägerschichten kombiniert werden.

Die erwähnten Meltblowns sowie Stapelfaservliese haben also entweder zu wenig Substanz oder sind zu weich, um jeweils für sich allein eine saubere, dauerhafte Faltenbildung zu gewährleisten.

Die Verwendung von Stützschichten führt dazu, daß bei einer Prüfung des Kosten-Nutzen-Verhältnisses die Kosten für ein Spinnvlies zur Stützung eines Meltblowns bis zu 70 % der Gesamtkosten des Verbundes betragen können. Die Kosten für ein Gittergelege zur Stützung eines Stapelfaservlieses liegen immerhin noch bei bis zu 20 %, wobei hier die Gesamtkosten wesentlich höher liegen als bei der vorstehend genannten Ausführungsform.

Die Stützkomponenten entfalten ausschließlich einen Nutzen in Form einer mechanischen Stabilisierung, wohingegen sie filtertechnisch gesehen weitgehend nutzlos sind. Durch Spinnvliese können lediglich Partikel im Bereich > 5 µm zurückgehalten werden, weshalb diese auch als Vorfilter bezeichnet werden. Partikel dieser Größe sedimentieren im allgemeinen aber, bevor sie in den Heizungs- oder Klimaschacht, z. B. eines Kraftfahrzeugs, gelangen. Weiterhin ergibt sich der gravierende Nachteil, daß jedes Zusatzvlies oder Gitter stets auch mit einer Druckabfallerhöhung des gesamten Laminats einhergeht, die bis zu 30 % betragen kann.

Dies ist deshalb ein wichtiger Aspekt, weil Kraftfahrzeuge heute ein genau berechnetes Energieverteilungssystem aufweisen. Dem Bereich Heizung/Lüftung/Klima stehen nur begrenzte Energiemengen zur Verfügung. Die Kosten von Fahrzeugkomponenten dürfen sich nur in einem engen Rahmen bewegen. Anderseits werden von Automobilkäufern immer mehr Ansprüche an Komfort und Sicherheit gestellt. Unter diesen Gesichtspunkten sind Partikelfilter mit einem möglichst niedrigen Druckabfall von besonderer Bedeutung, da ein niedriger Druck gleichbedeutend ist mit einem klein dimensionierten Lüftermotor und deshalb mit einem entsprechend geringen Energieverbrauch. Darüber hinaus bedeutet ein niedriger Differenzdruck auch eine geringere Geräuschentwicklung des Lüfters zum Durchsatz bestimmter Luftmengen im Fahrzeug und damit eine Erhöhung des Fahrkomforts.

Die Forderung nach Filtersystemen mit niedrigem Differenzdruck konkurriert mit der geforderten Abscheideleistung und der geforderten Standzeit, also der Zeit ausgedrückt in Kilometerlaufleistung, die ein Filter im Fahrzeug verbleiben kann, bis er ausgetauscht werden muß.

Pollenfilter, die nur Pollen aus der einströmenden Luft im Fahrzeug filtern, sind für Allergiker weniger hilfreich. Die Allergene, auf die das Immunsystem dieser Personengruppe reagiert, sind Proteine, deren Durchmesser nur einen Bruchteil des Pollendurchmessers beträgt. Sie liegen im Größenbereich um 0,1 µm, das heißt dem Bereich, der für Partikelfilter die größten Probleme aufweist, dem sogenannten MPPS (Most penetrating particle size). Dementsprechend sollten für Allergiker brauchbare Lösungen eine Abscheideleistung von mindestens 50 % aufweisen, wobei diese Abscheideleistung mit einem Aerosol gemessen wird, dessen Partikel in etwa die gleiche Dichte aufweisen, zum Beispiel NaCl. Dabei soll mit derartigen Filtern beim Einbau in Kraftfahrzeugen eine Standzeit von 30.000 Kilometern erreicht werden.

Theoretisch wäre es möglich, Stapelfaservliese und Meltblownvliese so herzustellen, daß sie hinreichend eigensteif und damit plissierbar sind. Dabei ist aber zu berücksichtigen, daß bei Stapelfaservliesen eine Verfestigung entweder thermisch oder mit Bindern erfolgt, wobei man im ersten Fall einen vergleichsweise sehr hohen Differenzdruck in Kauf nehmen muß, im letzteren hat man mit sehr hohen Emmisionswerten zu rechnen. Um andererseits Meltblownvliese für einen Einsatz, beispielsweise in einer Kraftfahrzeug-Innenraumfilterkassette, ausreichend stabil zu machen, müßte ein Flächengewicht von mehr als 130 g/m² erreicht werden. Der Durchmesser einer Meltblown-Faser liegt im Bereich von etwa 2 µm. Mit der Grammauflage und dem Faserdurchmesser hat man hiervon ausgehend mit einem nicht akzeptablen Differenzdruck zu rechnen.

Der Erfindung liegt die Aufgabe zugrunde, eine Filteranordnung der eingangs genannten Art so auszugestalten, daß sie bei kostengünstiger Herstellbarkeit und Verarbeitbarkeit einen niedrigen Differenzdruck bei hoher Standzeit gewährleistet.

Diese Aufgabe wird erfindungsgemäß dadurch gelöst, daß als Vliesmaterial ein einlagiges, trägerloses Mikro-Spunbondvlies verwendet wird, dessen Flächengewicht zwischen 70 g/m² und 200 g/m², vorzugsweise zwischen 110 und 150 g/m², dessen Dicke zwischen 0,7 und 1,5 mm, und dessen Faserstärken zwischen 2 und 20 µm bei einer mittleren Faserstärke von 3 bis 5 um liegen.

Vorteilhafterweise ist weiterhin vorgesehen, daß das Vlies abströmseitig eine höhere Faserdichte aufweist als anströmseitig, und daß das Vlies sortenrein aus PP oder PES oder PC hergestellt ist.

Die Herstellung eines Mikro-Spunbondvlieses der hier in Betracht stehenden Art wird im einzelnen in DE 41 23 122 A1 beschrieben. Überraschenderweise wurde gefunden, daß durch eine derartige Herstellungstechnik bei Einhaltung der beanspruchten Parameter eine Vliesschicht geschaffen wird, die ohne Kaschierung und ohne Stützschicht eine hinreichende Eigensteifigkeit aufweist, um sie plissieren zu können. Dabei besteht ein besonderer Vorteil darin, daß die Eigensteifigkeit praktisch isotrop ist, das heißt in jeder Vliesrichtung wird etwa die gleiche Biegesteifigkeit erzielt. Dies dürfte daran liegen, daß eine Vliesschicht der in Betracht stehenden Art einerseits eine mittlere Faserstärke zwischen 3 und 5 µm aufweist, wodurch die sehr guten Filtereigenschaften bedingt sind, anderseits aber auch dickere Fasern bis 20 µm vorhanden sind, die eine Art natürliches Stützgerüst bilden ohne - im Gegensatz zu den vorbekannten aufkaschierten Stützschichten - die Filtereigenschaften, insbesondere im Sinne einer Erhöhung des Differenzdruckes negativ zu beeinflussen. Besonders günstige Eigenschaften können durch eine anschließende Ultraschallbehandlung und Kalandrierung erreicht werden. Durch die anströmseitig geringere Faserdichte und höhere Rauhigkeit wird erzielt, daß ankommende Partikel zuverlässig festgehalten werden, während die abströmseitig höhere Faserdichte und geringere Rauhigkeit dafür sorgt, daß keine Partikel in den Bereich der gefilterten Luft gelangen. Diese Ausgestaltung läßt sich mit dem für Mikro-Spunbondvliese typischen Herstellungsverfahren dadurch realisieren, daß man diejenige Seite des Vlieses, auf die das Vlies bei der Herstellung abgelegt wird, bei Einbau in den Filter als Abströmseite einsetzt.

Nachfolgende wird die Erfindung anhand eines bevorzugten Ausführungsbeispiels näher im Vergleich zu einem Filtermaterial gemäß dem Stand der Technik beschrieben. Ein solches Filtermaterial nach dem Stand der Technik wird beispielsweise unter der Marke Helsatech 8504 vertrieben:

| | Stand d. Technik | Erfindungsbeispiel |
|---|---|---|
| Flächengewicht in g/m² | 100 | 130 |
| Dicke in mm | 0,8 | 1,0 |
| Faserstärke in µm | ca. 3 | 2 - 20 (größere Faserstärken werden durch Faser bündelungen erreicht) |
| | | |
| Faserorientierung | wirr | abströmseitig längs der Warenbahn, anströmseitig wirr |
| | | |
| Faseraufbau | 3-lagiges Laminat, unterschiedliche Faserdichte der einzelnen Lagen | progressiv: hohe Faserdichte abströmseitig, niedrige Faserdichte anströmseitig |
| | | |
| Fasermaterial | PP/PES | PP |
| Biegesteifigkeit | | |
| (Verfahren nach Schlenker, DIN 53864) in cN/cm² | | |
| | längs 9,6 | längs = quer 26,7 |
| | quer 12,2 | |

Die Fasern werden relativ heiß unter Druck abgelegt, so daß sie sich miteinander verbinden und eine steife plissierfähige Matte entsteht.

| Vergleichsmessungen | Serienmaterial Stand d. Technik | Micro-Spunbond gemäß Beispiel |
|---|---|---|
| Druckabfall bei 3,8 m³ /min (Anströmfläche 0,06 m²) | 60 Pa | 40 Pa |
| | | |
| Abscheideleistung mit NaCl bei 0,3 - 0,5 µm Partikeldurchmesser | 50 % | 50 % |
| | | |
| Druckabfall bei einem Volumenstrom von 3,8 m³/min (Anströmfläche 0,06 m²) nach Alterung in einer Alterungsprüfstrecke, beaufschlagt mit 50.000 m³ Straßenluft von einer vielbefahrenen Straße | 300 Pa | 80 Pa |
| | | |
| Foggingwert (Kondensatwert) | < 5 mg/g | < 0,5 mg/g |
| | | |
| Brennrate nach MVSS 302 (DIN 75200) | 30 mm/min | brennt nicht |
| | | |
| Anzahl der Lagen im Filtermedium | 3 | 1 |
| | | |
| Materialkomponenten | PP / PES | PP |
| | | |
| Funktionstemperatur | -40 - 100 °C | -40 - 100 °C |

Ein Filter gemäß der Erfindung zeichnet sich also gegenüber dem Filter nach dem Stand der Technik zusätzlich durch verbesserte Standzeiten aus, ohne daß die Abscheideleistung beeinträchtigt wird.

Zur ergänzenden Veranschaulichung der Erfindung wird nachfolgend noch Bezug genommen auf die Zeichnung. Dabei zeigen:
- Fig. 1: eine schematische Darstellung des Prinzips der Entstehung unterschiedlicher Faserstärken bei Spinnfasern, die nach dem erfindungsgemäß vorgesehenen Mikro-Spunbond-Verfahren hergestellt sind,
- Fig. 2: eine schematische Darstellung der Faseranordnung im Vlies abströmseitig,
- Fig. 3: eine schematische Darstellung der Faseranordnung im Vlies anströmseitig und
- Fig. 4: eine schematische perspektivische Ausgestaltung einer Filteranordnung mit einem erfindungsgemäßen, plissierten Vlies in einem Rahmen.

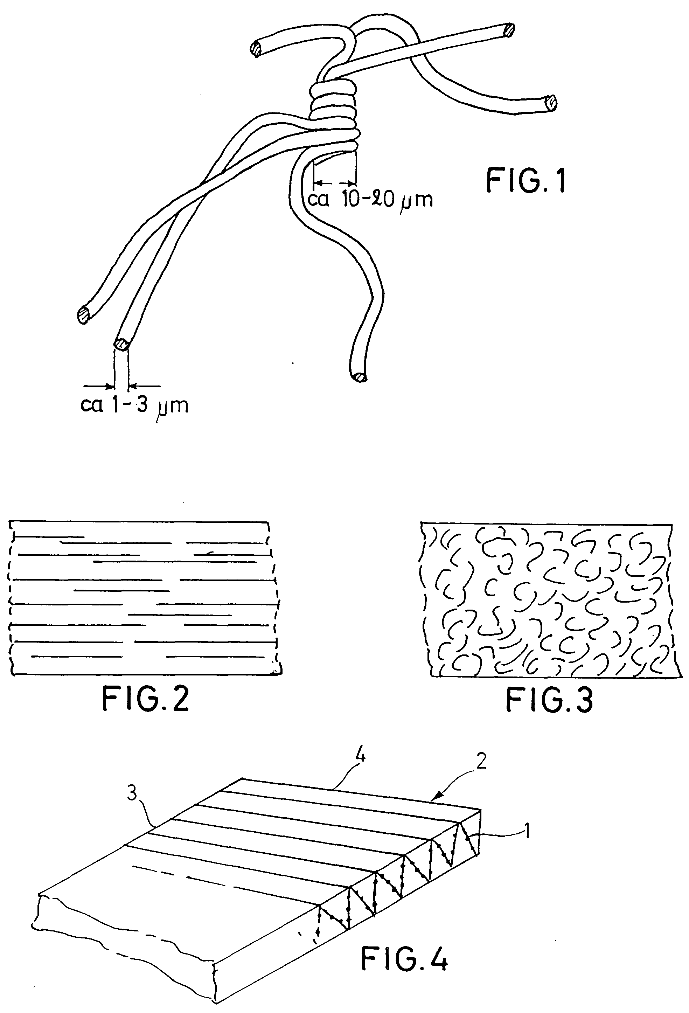

In Fig. 1 ist die Faseranordnung dargestellt, wie sie beim Spunbond-Verfahren entsteht und wie sie für die erfindungsgemäße Filteranordnung ausgenutzt wird. Dabei ist erkennbar, daß einerseits ein "Kern" von dicken Fasern mit einer Stärke von 2 bis 20 um vorgesehen ist und andererseits einzelne Faserausläufer für sich nur eine Dicke von 1 bis 3 µm aufweisen.

Beim Vergleich der Figuren 2 und 3 wird deutlich, daß abströmseitig die Fasern längs-ausgerichtet ausgebildet sind und dementsprechend eine relativ hohe Faserdichte aufweisen, wohin gegen Fig. 3 zeigt, daß anströmseitig die Fasern wirr abgelegt sind und dementsprechend eine vergleichsweise geringe Dichte aufweisen.

Fig. 4 zeigt eine Filteranordnung mit einem plissierten Vlies 1, wobei die Plissierung, d. h. die Faltenlegung des Vlieses seitlich gestrichelt angedeutet erkennbar ist. Das plissierte Vlies 1 ist in einem Rahmen 2 befestigt, der Längsseiten 3 und Schmalseiten 4 aufweist und aus dem gleichen Kunststoff besteht, wie das Vlies 1, so daß bei der Entsorgung sortenreiner Kunststoff gegeben ist.

## Patentansprüche

1. Filteranordnung umfassend eine plissierte Vliesschicht, **dadurch gekennzeichnet, daß** die Vliesschicht als einlagiges, trägerloses Mikro-Spunbondvlies ausgebildet ist, dessen Flächengewicht zwischen 70 g/m² und 200 g/m², vorzugsweise zwischen 110 g/m² und 150 g/m², dessen Dicke zwischen 0,7 und 1,5 mm und dessen Faserstärken zwischen 2und 20 µm liegen, wobei größere Faserstärken durch Faserbündelungen erreicht werden, und wobei die mittlere Faserstärke zwischen 3 und 5 µm liegt.

2. Filteranordnung nach Anspruch 1, **dadurch gekennzeichnet, daß** das Mikro-Spunbond-Vlies abströmseitig eine höhere Faserdichte als anströmseitig aufweist.

3. Filteranordnung nach Anspruch 1 oder 2, **dadurch gekennzeichnet, daß** das Mikro-Spunbond-Vlies sortenrein aus PP oder PES oder PC hergestellt ist.

4. Filteranordnung nach Anspruch 1, **dadurch gekennzeichnet, daß** das Mikro-Spunbondvlies nach der Herstellung einer Nachbehandlung mit Ultraschall und/oder Kalandrieren unterzogen ist.

5. Filteranordnung nach Anspruch 1, **dadurch gekennzeichnet, daß** bei Durchströmgeschwindigkeiten durch die Filteranordnung unterhalb von 250 m³/m² h der anfangs Druckverlust kleiner als 50 Pa ist.

6. Filteranordnung nach Anspruch 3, **dadurch gekennzeichnet, daß** die Vliesschicht in eine flache Filterkassette eingebracht ist, wobei das Rahmenmaterial und ggf. das Klebematerial aus demselben Material besteht wie das Vlies.

7. Filteranordnung nach Anspruch 1, **dadurch gekennzeichnet, daß** das Vlies plissiert in eine flache Filterkassette mit Faltenhöhen zwischen 10 mm und 100 mm eingebracht ist.

8. Filteranordnung nach Anspruch 2, **dadurch gekennzeichnet, daß** die Fasern des Vlieses anströmseitig gekräuselt und ungeordnet und abströmseitig im wesentlichen längs-ausgerichtet abgelegt sind.

## Claims

1. A filter arrangement comprising a pleated non-woven layer, **characterized in that** the non-woven layer is a single-layer, self-supporting micro-spunbonded fabric, the grammage of which ranges from 70 g/m² to 200 g/m², preferably from 110 g/m² to 150 g/m², the thickness of which ranges from 0.7 to 1.5 mm and the fiber thickness of which ranges from 2 to 20 µm with greater fiber thickness being achieved by fiber concentration, and with an average fiber thickness of 3 to 5 µm.

2. A filter arrangement according to claim 1, **characterized in that** the micro-spunbonded fabric has a higher fiber density on the flow-off side than on the flow-in side.

3. A filter arrangement according to claim 1 or 2, **characterized in that** the micro-spunbonded fabric is a pure-grade fabric made from PP or PES or PC.

4. A filter arrangement according to claim 1, **characterized in that** after production, the micro-spunbonded fabric is subject to after treatment by ultrasound and/or calendering.

5. A filter arrangement according to claim 1, **characterized in that** with velocities of flow through the filter arrangement of less than 250 m³/m², the initial pressure loss is less than 50 Pa.

6. A filter arrangement according to claim 3, **characterized in that** the non-woven layer is placed into a flat filter box, the material of the and, as the case may be, the adhesive consisting of the same material as the non-woven.

7. A filter arrangement according to claim 1, **characterized in that** the non-woven is pleated and inserted in a flat filter box with pleat heights ranging from 10 mm to 100 mm.

8. A filter arrangement according to claim 2, **characterized in that** the fibers of the non-woven are curled and random on the flow-in side and placed substantially in lengthwise alignment on the flow-off side.

## Revendications

1. Dispositif de filtration comportant une couche de non-tissé plissé, caractérisé en ce que la couche de non-tissé est agencée sous la forme d'un non-tissé de micro-spunbond monocouche sans support dont le poids par unité de surface est compris entre 70 g/m² et 200 g/m², de préférence entre 110 g/m² et 150 g/m², dont l'épaisseur se situe entre 0,7 et 1,5 mm, et dont les épaisseurs de fibres se situent entre 2 et 20 µm, des épaisseurs de fibres plus importantes étant obtenues par des faisceaux de fibres, et l'épaisseur moyenne des fibres étant comprise entre 3 et 5 µm.

2. Dispositif de filtration selon la revendication 1, caractérisé en ce que du côté du reflux, la densité de fibres du non-tissé de micro-spunbond est plus élevée que du côté de l'afflux.

3. Dispositif de filtration selon la revendication 1 ou 2, caractérisé en ce que le non-tissé de micro-spunbond est fabriqué à partir d'une même qualité de PP ou de PES ou de PC.

4. Dispositif de filtration selon la revendication 1, caractérisé en ce que le non-tissé de micro-spunbond est soumis après la fabrication à un traitement postérieur aux ultrasons et/ou à un calandrage.

5. Dispositif de filtration selon la revendication 1, caractérisé en ce que, lors de vitesses de passage inférieures à 250 m³/m² h à travers le dispositif de filtration, la perte de charge initiale est inférieure à 50 Pa.

6. Dispositif de filtration selon la revendication 3, caractérisé en ce que la couche de non-tissé est insérée dans une cassette filtrante plate, le matériau du cadre, et le cas échéant la colle, étant constitués du même matériau que le non-tissé.

7. Dispositif de filtration selon la revendication 1, caractérisé en ce que le non-tissé plissé est inséré dans une cassette filtrante plate avec des hauteurs de plis comprises entre 10 mm et 100 mm.

8. Dispositif de filtration selon la revendication 2, caractérisé en ce que, du côté de l'afflux, les fibres du non-tissé sont disposées en ondulations et de façon non ordonnée, et du côté du reflux elles sont pour l'essentiel disposées en étant orientées dans le sens longitudinal.
